# EUROPÄISCHE PATENTSCHRIFT

(11) **EP 2 065 692 B1**
(45) Veröffentlichungstag und Bekanntmachung des Hinweises auf die Patenterteilung: **13.03.2013**
(21) Anmeldenummer: 08008622.6
(22) Anmeldetag: 07.05.2008
(51) Int. Cl.: G01M 3/28, F17D 5/04

(54) **Doppelwandiges Kanalsystem mit Prüfvorrichtung**
Double walled pipe system with test device
Canalisation à double paroi avec dispositif de contrôle

(30) Priorität: 28.11.2007 DE 202007016602 U
(43) Veröffentlichungstag der Anmeldung: 03.06.2009
(73) Patentinhaber: Gebr. Fasel Betonwerk GmbH, 56472 Nisterau (DE)
(72) Erfinder: Fasel, Stefan, 56472 Nisterau (DE); Fasel, Thomas, 56472 Nisterau (DE); Fasel, Fabian, 56472 Nisterau (DE)
(74) Vertreter: Laufhütte, Dieter

(56) Entgegenhaltungen:
- WO-A1-90/00698
- DE-A1- 19 601 652
- DE-U1- 29 521 615
- US-A- 3 410 313
- US-A- 5 971 029
- US-A- 6 032 699

## Beschreibung

Die vorliegende Erfindung betrifft ein Kanalsystem mit wenigstens zwei Schächten mit doppelt gedichteten Schachtmuffen, wobei die Schachtmuffen durch wenigstens ein doppelwandiges, doppelt gedichtetes Kanalrohr verbunden werden und wobei sich zwischen den Schachtmuffen und dem doppelwandigem Kanalrohr ein gemeinsamer ringförmiger Dichtungsraum zwischen den Doppeldichtungen ausbildet.

Es sind Kanalsysteme bekannt, z.B. aus WO 90/00698 und 5,971,029 die doppelwandige Kanalrohre umfassen, vorzugsweise Kunststoff-Innenrohre eingeschoben in Beton-Außenrohre. Das Innen- und das Außenrohr stehen dabei nicht in Verbindung, da aufgrund der unterschiedlichen Wärmeausdehnungskoeffizienten ein frühzeitiges Versagen des Kanalrohrs zu erwarten wäre. Somit werden stabilere Kanalsysteme ermöglicht.

Ebenso ist es bereits bekannt, sowohl das Innenrohr als auch das Außenrohr mit einer eigenen Dichtung zu versehen, so dass sich ein doppelt abgedichtetes Kanalsystem ergibt. Dies erhöht die Betriebssicherheit des Systems wesentlich. Diese Kanalrohre werden an Schächte mittels Schachtmuffen angeschlossen, die sowohl für Innen- als auch Außenrohre jeweils eine Dichtung aufweisen. In den Schächten können mehrere Kanalrohre zusammenlaufen und/oder abzweigen.

Als nachteilig bei den bekannten Kanalsystemen hat sich herausgestellt, dass die teilweise kilometerweit verlegten Kanalsysteme nur mit großem Aufwand überprüft werden können. So werden beispielsweise ferngesteuerte Kamerasysteme zur optischen Begutachtung der Kanäle verwendet. Diese Vorgehensweise ist sehr aufwendig und zudem nicht geeignet, den Zustand des Außenrohres zu überprüfen.

Eine weitere bekannte Überprüfungsmöglichkeit besteht darin, den Kanal abzusperren und eine Druckprüfung vorzunehmen. Dies weist jedoch den Nachteil auf, dass diese Verfahren zeitaufwendig ist, da der gesamte Kanal zunächst mit dem Prüfmedium zu füllen ist. Außerdem kommt es zu einer nicht unerheblichen Betriebsstörung.

Es ist daher Aufgabe der vorliegenden Erfindung, ein Kanalsystem der eingangs genannten Art dahingehend weiterzubilden, dass es die aus dem Stand der Technik bekannten Nachteile überwindet.

Diese Aufgabe wird durch ein Kanalsystem mit den Merkmalen des Anspruchs 1 gelöst. Danach ist vorgesehen, dass ein Kanalsystem wenigstens zwei Schächte mit doppelt gedichteten Schachtmuffen aufweist, wobei die Schachtmuffen durch wenigstens ein doppelwandiges, doppelt gedichtetes Kanalrohr verbunden werden. Dabei bildet sich zwischen den Schachtmuffen und dem doppelwandigem Kanalrohr ein gemeinsamer ringförmiger Dichtungsraum zwischen den Doppeldichtungen aus. Ferner ist eine Prüfvorrichtung vorgesehen, wobei die Schächte Verbindungsmittel umfassen, die die Prüfvorrichtung mit dem gemeinsamen Dichtungsraum verbinden.

Dabei umfassen die Verbindungsmittel ein Rohr, das sich von der Innenwand des Schachtes zur Schachtmuffe erstreckt und zwischen den beiden Dichtungen der Schachtmuffe austritt. Dadurch ergibt sich der Vorteil, dass der in den Schacht einsteigende Kanalarbeiter guten Zugang zu den Verbindungsmitteln hat und dadurch beispielsweise sehr einfach seine Prüfmittel anbringen kann.

Dadurch ergibt sich der Vorteil, dass sehr einfach und schnell eine Überprüfung des betreffenden Kanalabschnittes vorgenommen wird. So werden beispielsweise Routinekontrollen erheblich erleichtert, bei denen z.B. die Überprüfung hinsichtlich der Dichtigkeit ausreichend ist. Die Prüfdauer ist zudem äußerst kurz, da nur der gemeinsame Dichtungsraum, der auch den Raum zwischen Innen- und Außenrohr umfaßt, überprüft wird. Eine Absperrung des eigentlichen Kanals ist somit nicht notwendig. Durch die Art der Überprüfung lassen sich zudem gleichzeitig sowohl der Zustand des Innen- als auch der Zustand des Außenrohres überprüfen.

Von Vorteil ist es, wenn mittels der Prüfvorrichtung eine Dichtigkeitsprüfung mittels eines Prüfmediums durchführbar ist. Dabei ist es denkbar, dass durch Einleitung eines gasförmigen oder flüssigen Prüfmediums ein Druck im gemeinsamen Dichtungsraum aufgebaut wird, aus dessen Verlauf Rückschlüsse auf den Zustand des untersuchten Kanalabschnittes geschlossen werden können.

Es kann vorgesehen sein, dass die Prüfvorrichtung einen Anschluß für ein Prüfmedium, ein erstes Absperrmittel, eine Messeinrichtung mit Anzeige, ein zweites Absperrmittel sowie ein Anschlussstück zum Anschluß an das Verbindungsmittel des Schachtes aufweist. Die Absperrmittel können beispielsweise als Absperrhähne ausgeführt sein. Dadurch wird es möglich, zunächst die Prüfvorrichtung abzusperren und eine Zuleitung des Prüfmediums anzuschließen. Durch Öffnen des ersten Absperrhahnes kann dann der Referenzdruck der Zuleitung des Prüfmediums abgenommen werden. Beim Aufdrehen des zweiten Absperrhahnes kann dann das Prüfmedium in den gemeinsamen Dichtungsraum des Kanalsystems eingeleitet werden. Durch die zeitliche Veränderung des Druckes können in der Folge Rückschlüsse auf den Zustand des Kanalabschnittes gezogen werden.

Von Vorteil ist es, wenn der Anschluß für das Prüfmedium als Schnellverschluß ausgeführt ist. Dadurch kann beispielsweise sehr schnell ein Schlauch, der das Prüfmedium zuleitet, angeschlossen werden. Ferner muß so im beengten Kanalschacht nicht eine umständliche Befestigung oder Dichtungsprozedur durchgeführt werden.

Eine weitere Ausführungsform besteht darin, dass die Meßeinrichtung ein Manometer ist. Eine derartige Meßeinrichtung kann direkt mittels eines Rohres an die Verbindungsmittel des Kanalsystems angeschlossen werden.

Ferner kann vorgesehen sein, dass das Kanalrohr ein Kunststoff-Innenrohr und Beton-Außenrohr aufweist. Durch das Beton-Außenrohr wird eine erhöhte Stabilität erreicht, während das Kunststoff-Innenrohr eine erhöhte Korrosionsbeständigkeit aufweist.

Die Dichtigkeitsprüfung kann mit Wasser oder Luft durchführbar sein. Dadurch ergibt sich der Vorteil, ungefährliche sowie das Kanalsystem nicht schädigende Prüfmedien einsetzen zu können.

Weitere Vorteile und Einzelheiten der Erfindung werden nachstehend durch ein in der Zeichnung dargestelltes Ausführungsbeispiel näher erläutert.

Es zeigen:
- Figur 1:: eine Draufsicht und eine Schnittzeichnung A-A in Seitenansicht des Kanalschachts des erfindungsgemäßen Kanalsystems und
- Figur 2:: eine vergrößerte Schnittzeichnung des Kanalschachts.

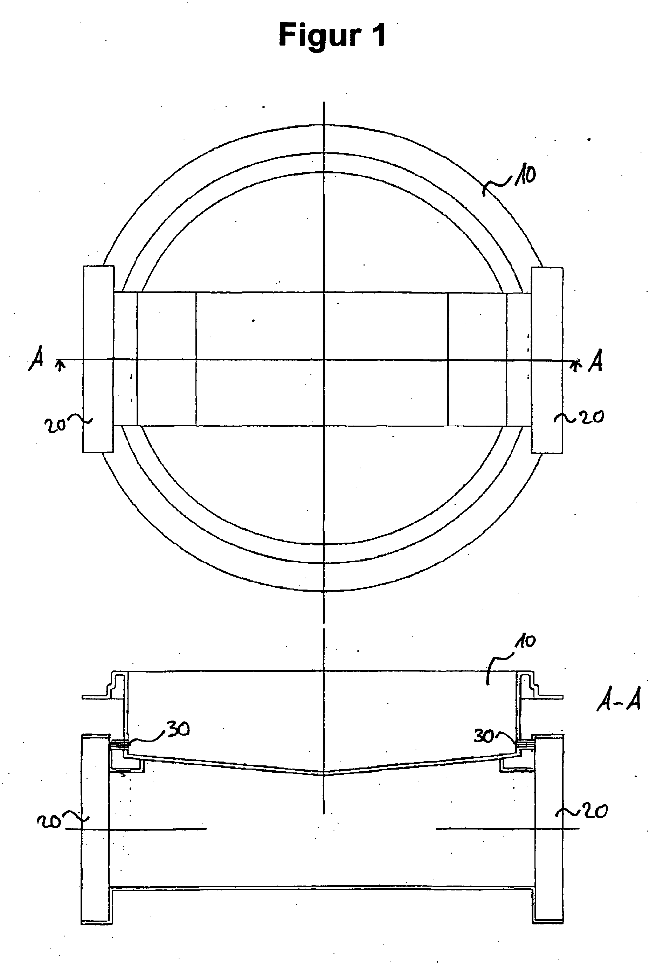

Figur 1 zeigt einen Kanalschacht 10 des erfindungsgemäßen Kanalsystems, der zwei doppelt gedichtete Kanalmuffen 20 aufweist. Die nicht gezeigten doppelwandigen Kanalrohre, bestehend auf einem Kunststoff-Innenrohr sowie einem Beton-Außenrohr, werden an den Kanalmuffen 20 angeschlossen.

Die ebenfalls nicht gezeigte Druckmessvorrichtung wird an das Verbindungsrohr 30 angeschlossen, um den sich ab dieser Kanalmuffe 20 erstreckenden Kanalabschnitt hinsichtlich seiner Dichtigkeit zu überprüfen.

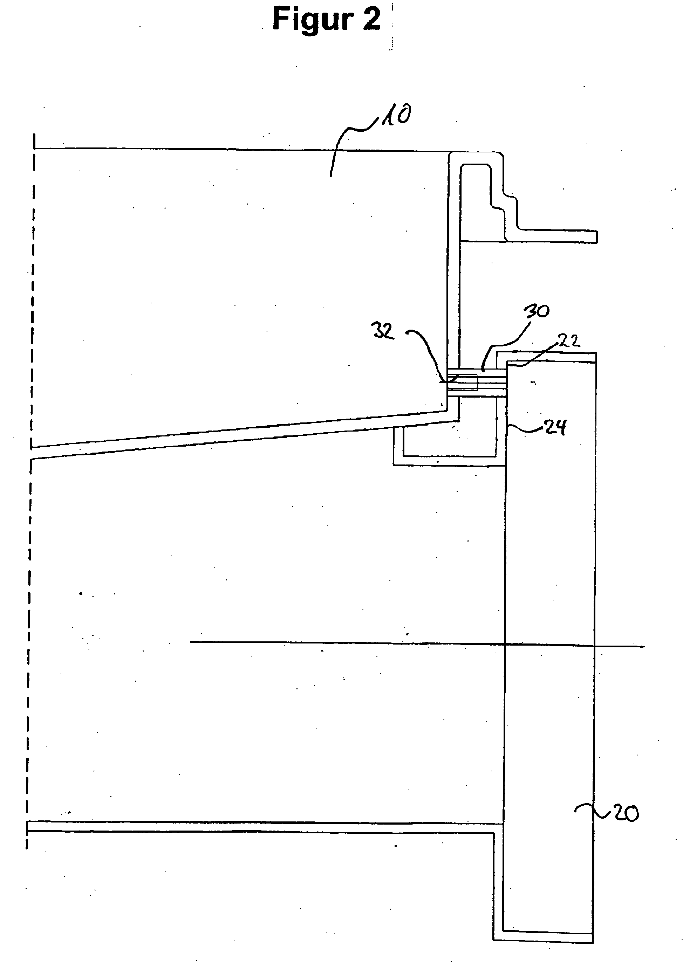

Wie dies aus Figur 2 zu entnehmen ist, erstreckt sich das Verbindungsrohr 30 von der Innenwand des Kanalschachtes 10 in die Kanalmuffe 20. Das Verbindungsrohr 30 tritt in der Kanalmuffe 20 dabei zwischen der Dichtungsfläche 22 für die Dichtung des äußeren Kanalrohres und der Dichtungsfläche 24 des inneren Rohres aus. Somit schafft das Verbindungsrohr 30 einen Zugang zum Zwischenraum von Innenrohr und Außenrohr, der damit für eine Überprüfung zugänglich wird.

Das Verbindungsrohr 30 weist dabei ein Innengewinde 32 auf, in das eine Prüfvorrichtung eingeschraubt werden kann. Vorzugsweise ist die nicht gezeigte Prüfvorrichtung ausgehend von Innengewinde derart aufgebaut, dass in das Innengewinde 32 ein Anschlußrohr mit einem Absperrhahn eingeschraubt wird. Auf den Absperrhahn folgt ein Manometer, wiederum gefolgt von einem Absperrhahn. Nach dem Absperrhahn ist eine Schnellkupplung für Schläuche vorgesehen.

Zur Überprüfung wird nun die vorgenannte Prüfvorrichtung über die Schnellkupplung mit einer Druckluftquelle verbunden. Es ergibt sich bei einem unversehrten und dichten Kanalabschnitt bis zum nächsten Schacht ein ringförmiger Prüfraum, der mit Druckluft befüllt wird. Über Ventile kann beispielsweise an nächsten jeweiligen Schacht der Druckluftabfall eingestellt werden.

Zu Beginn des Prüfvorgangs wird zunächst nur der Absperrhahn vor dem Manometer geöffnet, während der Absperrhahn vor Verbindungsrohr in den ringförmigen Prüfraum geschlossen bleibt. Dadurch kann eingangs der Prüfung der anliegende Referenzdruck gemessen werden. In einem nächsten Schritt wird der zweite Absperrhahn geöffnet, um die Druckluft in den Prüfraum einzuleiten. Durch Einstellen eines Prüfdrucks läßt sich in der Folge ermitteln, ob der untersuchte Kanalabschnitt dicht ist oder nicht.

## Patentansprüche

1. Kanalsystem mit wenigstens zwei Schächten (10) mit Schachtmuffen (20), wobei die Schachtmuffen (20) durch wenigstens ein doppelwandiges Kanalrohr verbunden werden, wobei sich zwischen den Schachtmuffen (20) und dem doppelwandigem Kanalrohr ein gemeinsamer ringförmiger Dichtungsraum ausbildet, wobei eine Prüfvorrichtung vorgesehen ist und wobei die Schächte Verbindungsmittel (30) umfassen, die die Prüfvorrichtung mit dem gemeinsamen Dichtungsraum verbinden.
**dadurch gekennzeichnet,**
**dass** die Schachtmuffen (20) doppelt gedichte sind und derart mit dem wenigstens einen doppelt gedichteten Kanalrohr verbunden werden, dass der gemeinsame ringförmige Dichtungsraum zwischen Doppeldichtungen (22, 24) ausgebildet ist und dass die Verbindungsmittel ein Rohr (30) umfassen, das sich von der Innenwand der Schachtes (10) zur Schachtmuffe (20) erstreckt und zwischen den beiden Dichtungen (22, 24) der Schachtmuffe austritt.

2. Kanalsystem nach Anspruch 1, **dadurch gekennzeichnet, dass** mittels der Prüfvorrichtung eine Dichtigkeitsprüfung mittels eines Prüfmediums durchführbar ist.

3. Kanalsystem nach einem der vorhergehenden Ansprüche, **dadurch gekennzeichnet, dass** die Prüfvorrichtung einen Anschluß für ein Prüfmedium, ein erstes Absperrmittel, eine Meßeinrichtung mit Anzeige, ein zweites Absperrmittel sowie ein Anschlußstück (32) zum Anschluß an das Verbindungsmittel des Schachtes (10) aufweist.

4. Kanalsystem nach einem der vorhergehenden Ansprüche, **dadurch gekennzeichnet, dass** der Anschluß für das Prüfmedium als Schnellverschluß ausgeführt ist.

5. Kanalsystem nach einem der vorhergehenden Ansprüche, **dadurch gekennzeichnet, dass** die Meßeinrichtung ein Manometer ist.

6. Kanalsystem nach einem der vorhergehenden Ansprüche, **dadurch gekennzeichnet, dass** das Kanalrohr ein Kunststoff-Innenrohr und Beton-Außenrohr aufweist.

7. Kanalsystem nach einem vorhergehenden Ansprüche, **dadurch gekennzeichnet, dass** die Dichtigkeitsprüfung mit Wasser oder Luft durchführbar ist.

## Claims

1. A channel system comprising at least two conduits (10) having conduit seals (20), wherein the conduit seals (20) are connected by at least one double-wall channel pipe, wherein a common ring-shaped sealing space is formed between the conduit seals (20) and the double-wall channel pipe, wherein a test apparatus is provided and wherein the conduits include connection means (30) which connect the test apparatus to the common sealing space,
**characterised in that**
the conduit seals (20) are double-sealed and are connected to the at least one double-sealed channel pipe; **in that** the common ring-shaped sealing space is formed between double seals (22, 24); and **in that** the connections means include a pipe (30) which extends from the inner wall of the conduit (10) to the conduit seal (20) and exits between the two seals (22, 24) of the conduit seal.

2. A channel system in accordance with claim 1, **characterised in that** a leak test can be carried out using a test medium by means of the test apparatus.

3. A channel system in accordance with one of the preceding claims, **characterised in that** the test apparatus has a connector for a test medium, a first blocking means, a measuring device with display, a second blocking means and a connector piece (32) for connecting to the connection means of the conduit (10).

4. A channel system in accordance with one of the preceding claims, **characterised in that** the connector for the test medium is designed as a quick-closure.

5. A channel system in accordance with one of the preceding claims, **characterised in that** the measuring device is a manometer.

6. A channel system in accordance with one of the preceding claims, **characterised in that** the channel pipe has a plastic inner pipe and a concrete outer pipe.

7. A channel system in accordance with one of the preceding claims, **characterised in that** the leak test can be carried out using water or air.

## Revendications

1. Système de canal avec au moins deux puits (10) avec des manchons de puits (20), les manchons de puits (20) étant raccordés par au moins un tuyau de canal à deux parois, un espace d'étanchéité commun annulaire se formant entre les manchons de puits (20) et le tuyau de canal à deux parois, un dispositif de contrôle étant prévu et les puits comprenant des moyens de jonction (30) qui relient le dispositif de contrôle avec l'espace d'étanchéité commun.
**caractérisé**
**en ce que** les manchons de puits (20) ont une double étanchéité et sont reliés au moins avec l'un des tuyaux de canal à double étanchéité de sorte que l'espace d'étanchéité commun annulaire est constitué entre des joints doubles (22, 24), et en ce que les moyens de jonction comprennent un tuyau (30), qui s'étend de la paroi interne du puits (10) vers le manchon de puits (20) et sort entre les deux joints (22, 24) du manchon de puits.

2. Système de canal selon la revendication 1, **caractérisé en ce qu'**au moyen du dispositif de contrôle, un contrôle d'étanchéité est réalisable au moyen d'un milieu de contrôle.

3. Système de canal selon une quelconque des revendications précédentes, **caractérisé en ce que** le dispositif de contrôle présente un raccordement pour un milieu de contrôle, un premier moyen de sectionnement, un dispositif de mesure avec affichage, un deuxième moyen de sectionnement ainsi qu'une pièce de raccord pour le raccordement au moyen de jonction du puits (10).

4. Système de canal selon une quelconque des revendications précédentes, **caractérisé en ce que** le raccordement pour le milieu de contrôle est agencé en fermeture rapide.

5. Système de canal selon une quelconque des revendications précédentes, **caractérisé en ce que** le dispositif de mesure est un manomètre.

6. Système de canal selon une quelconque des revendications précédentes, **caractérisé en ce que** le tuyau de canal présente un tuyau interne en plastique et un tuyau externe en béton.

7. Système de canal selon une quelconque des revendications précédentes, **caractérisé en ce que** le contrôle d'étanchéité est réalisable à l'eau ou à l'air.
